Europäisches Patentamt

European Patent Office

Office européen des brevets

(19)

(11) Publication number: **0 114 317**
A2

(12) # EUROPEAN PATENT APPLICATION

(21) Application number: 83112695.8

(22) Date of filing: 16.12.83

(51) Int. Cl.³: **B 01 D 46/12**

(30) Priority: 27.12.82 US 453454

(43) Date of publication of application:
01.08.84 Bulletin 84/31

(84) Designated Contracting States:
DE FR GB SE

(71) Applicant: ALLIS-CHALMERS CORPORATION
1126 South 70th Street
West Allis Wisconsin(US)

(72) Inventor: Britt, Monroe Allen
1208 South Second Street
Louisville Kentucky 40203(US)

(72) Inventor: Hoyland, Thomas Michael
4323 Southern Parkway, Apt. A2
Louisville Kentucky 40214(US)

(74) Representative: Dipl.-Phys.Dr. Manitz Dipl.-Ing.
Finsterwald Dipl.-Ing. Grämkow Dipl.-Chem.Dr. Heyn
Dipl.-Phys.Rotermund Morgan B.Sc.(Phys.)
Robert-Koch-Strasse 1
D-8000 München 22(DE)

(54) Air filtering apparatus.

(57) A pulse cleaning device for a gas filter apparatus including a housing, a partition having at least one row of apertures dividing the interior of the housing into a dirty gas chamber and clean gas chamber, a dirty gas chamber providing ingress for a dirty gas stream into the dirty gas chamber, a clean gas outlet providing egress for clean gas from the clean gas chamber, and a filter secured in flow through relation across each of the apertures. The pulse cleaning device includes a tank supported on a pair of guide rails extending across the clean gas chamber. The tank, which is adapted to be moved back and forth across the width of the clean gas chamber by a chain drive mechanism during pulsing cleaning operations, is provided with pulsing nozzles which are adapted to inject a pulse or jet into each of the apertures as the nozzles come into alignment with them.

FIG.2

EP 0 114 317 A2

# AIR FILTERING APPARATUS

## BACKGROUND OF THE INVENTION

### Field of Invention

The present invention relates to gas filtering device and in particular to a reverse flow flushing arrangement for periodically cleaning the filters of the device.

### Description of the Prior Art

The prior art discloses a variety of filtering devices utilizing reverse flow flushing arrangements for cleaning the filter media provided in those devices.

For example, U.S. Patent No. 4,272,262 shows a high efficiency filtering device wherein a plurality of venturi nozzles are aligned above a row of V-shaped filter banks. As brought out in the patent, a high energy cleaning gas nozzle is aligned above each of the venturi nozzles which are adapted to periodically inject a momentary pulse or jet of cleaning gas into the venturi nozzles to create a reverse flow of gases through each of the filter banks to dislodge the particulates accummulating on the filter panels during filtering operations.

Various baghouse arrangements having reverse flow flushing systems have also been in use for a number of years. Typically, in that type of design a plurality of tubular filter bags are suspended in the gas cleaning compartment of the baghouse for filtering the dirty gases as they flow through the baghouse, and a high energy cleaning gas nozzle is aligned above a venturi nozzle communicating with the interior of each of the filter bags. As in the device shown in the foregoing patent, each of the gas cleaning nozzles is adapted to direct a jet of cleaning gas into one of the bags to create a reverse flow of gases through the bags to dislodge accummulated particulates.

While the reverse flow flushing arrangements heretofore in use have proven to be satisfactory for many applications, the necessity for securing a high energy cleaning gas nozzle and its associated valving above each of the venturi nozzles has resulted in a relatively complex and costly apparatus.

## SUMMARY OF THE INVENTION

The present invention relates to gas filtering devices and in particular to a reverse flow flushing apparatus adapted to be selectively positioned above each of a plurality of filter elements to create a reverse gas flow for dislodging particulates accummulating on the filter elements during filtering operations.

The filtering device incorporating the invention includes a housing, a partition dividing the housing into a dirty gas chamber and a clean gas chamber having a plurality of apertures aligned in one or more rows extending across the partition, a dirty gas inlet providing ingress for a dirty gas stream into the dirty gas chamber, a clean gas outet providing egress for a clean gas stream from the clean gas chamber, and a filter element secured in flow-through relation across each of the apertures in the partition.

The pulsing apparatus embodying the invention includes a pressurized tank connected to a source of pressurized gas having a carriage member secured to each of its ends, and a pair of guide rails extending across the clean gas chamber which support the carrage members. To accommodate pulse cleaning of the filter elements, the apparatus is provided with a pulsing nozzle carried by the tank for each row of apertures, and a drive mechanism adapted to move the tank back and forth across the gas cleaning chamber in a fashion sequentially aligning the pulsing nozzles with the apertures. Each of the pulsing nozzles is connected with the tank by a normally closed valve which can be opened momentarily by an electrical control system when the nozzle is aligned with one of the apertures. Thus, each time the drive mechanism draws the tank into alignment with the aperture, the control system momentarily opens the valves so that a pulse or jet of high energy gas is directed into the apertures to induce a reverse gas flow through their respective filter elements.

From the foregoing, it can be seen that the invention contemplates a relatively straight-forward and easily maintained pulsing arrangement which essentially eliminates the majority of the expensive pneumatic conduits, nozzles and sensitive control valving required in the pulsing arrangements heretofore in use. However, it is to be understood that various changes and modifications can be made in the apparatus disclosed herein without departing from the spirit and scope of the invention.

## DESCRIPTION OF THE DRAWINGS

Fig. 1 is a top plan view, partially in section, of a filtering device embodying the invention;

Fig. 2 is a front elevational view, partially in section, of the filtering device shown in Fig. 1;

Fig. 3 is a partial cross-sectional view taken substantially along line III-III in Fig. 2; and

Fig. 4 is an enlarged partial sectional view showing the tank and pulsing nozzle as its direction of travel across the clean gas chamber is being reversed at the right side of the chamber.

## DESCRIPTION OF THE PREFERRED EMBODIMENT

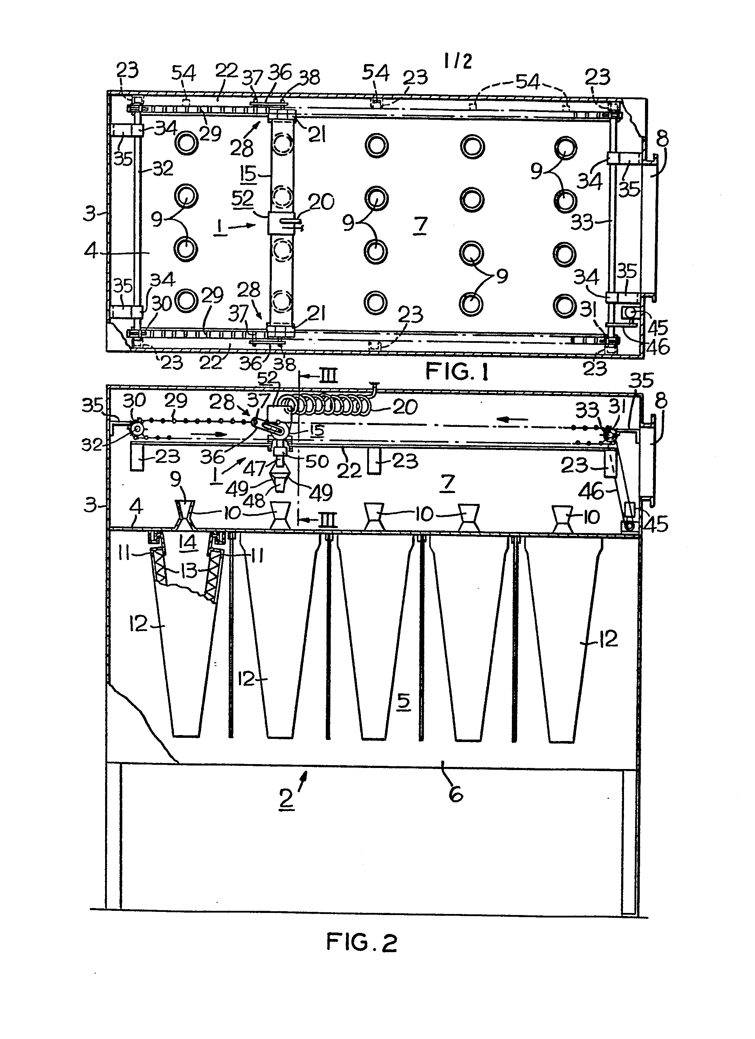

Referring to Fig. 1, the pulsing apparatus 1 embodying the invention is incorporated in a filtering device 2. The filtering device 2 includes a housing 3 wherein an apertured partition or plate 4 is secured across the housing 3 to divide it into a dirty gas chamber 5 opening into the atmosphere through an inlet opening 6 in the bottom of the housing and a clean gas chamber 7 provided with a clean gas outlet 8 which is adapted to be connected to the air inlet of a turbine or compressor (not shown). The apertured plate 4 includes a plurality of apertures 9 aligned in rows extending across the clean gas chamber 7, and, as will be described, a venturi nozzle 10 is secured to the plate 4 about each of the apertures 9.

As shown in the drawings, a plurality of filter supporting structures or frames 11 of a V-shaped cross-sectional configuration enclosed by a plate 12 on each end are secured to the partition 4 in side-by-side relation. Each of the frames 11 support a plurality of pleated filter panels 13 similar to those sold by the American Air Filter Company under its Pulse-Clean trademark to form a V-shaped bank of filter panels within each of the frames 12 which cooperates with the partition 4 to define a clean gas compartment 14 opening into the clean gas chamber 7 through apertures 9. Thus, the arrangement provides for atmospheric air to be drawn into the dirty gas chamber 5 through the opening 6 in the bottom of the housing hereafter it filters through the filter panels 13 into the clean gas compartments 14. The filtered air then flows through the apertures 9 in the clean gas chamber 7 and out of the housing through the clean gas outlet 8. In this regard, it is to be understood that although the embodiment shown in the drawings is designed to filter atmospheric air prior to introducing it into a turbine or compressor, the filtering device can also be used to filter industrial process gases prior to discharging them into the atmosphere by enclosing the bottom of the housing with a suitable hopper and providing an appropriate inlet for the dirty gases opening into the dirty gas chamber. Additionally, while it is not described in detail in this specification, the filtering device is preferably of a welded sheet metal construction wherein the filter panels can be removably secured in the frames 11 in essentially the same manner as shown in U.S. Patent No. 4,272,262.

The pulsing apparatus 1 includes a transversely extending pressurized tank 15 connected to a source of pressurize cleaning gas (not shown) outside the housing 3 via flexible tubing 20. The tank 15 extends

transversely of the clean gas chamber 7 and is supported by a pair of L-shaped carriage plates or members 21 secured to its ends which are in turn carried by a pair of horizontal tracks or rails 22 extending across the clean air chamber which are mounted on a plurality of brackets 23 secured to the front and back walls of the housing 3. In the embodiment shown, the base 24 of each of the carriage plates 21 is adapted to slide along the rail 22 supporting it as will be described, it being noted that a spacer 25 and retaining plate 26 are secured by a nut and bolt 27 to the base 24 of each of the carrage plates 21 to prevent the tank 15 from being inadvertantly lifted off the rails 22.

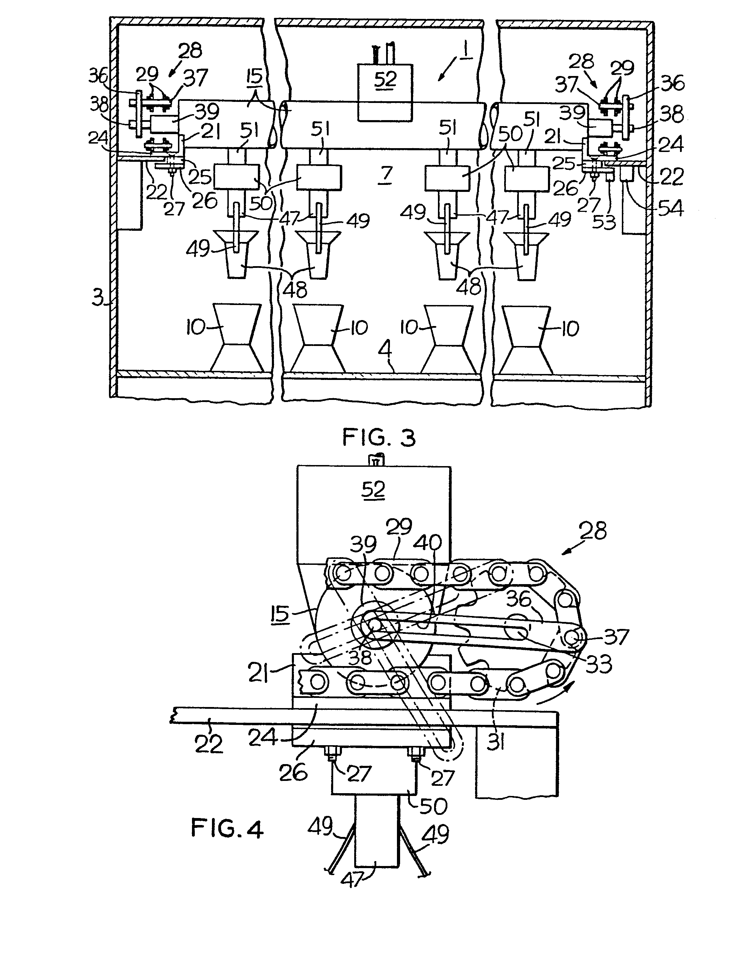

As shown in the drawings, the pulsing apparatus 1 is provided with a drive system 28 for moving the tank 15 back and forth along the rails 22. The drive system 28 includes a pair of endless chains 29 extending along the front and back walls of the housing which track around a pair of sprockets 30 and 31 which are affixed to a pair of shafts 32 and 33, respectively, which are rotatably supported at opposite sides of the clean gas chamber 7 by conventional bearings 34 mounted on brackets 35 secured to the side walls of the housing. The chains 29 are connected to opposite ends of the tank 15 by a slotted drag link 36 provided for each chain. As shown in Figs. 3 and 4, one end of each of the slotted drag links 36 is pivotally connected to its respective chain 29 by a suitable pin 37, and the other end of each of the links 36 is connected by a pin 38 projecting from a lug 39 affixed to its respective end of the tank which extends through an elongated slot 40 provided in each of the links. To accommodate moving the chains 29, and thus the tank 15 during pulsing operations, the shaft 33 is connected to an electrical drive motor 45 with associated gearing through a suitable chain and sprocket arrangement 46 to rotate the shaft 33 to move the chains 29 as indicated by the arrows in Fig. 2. In this regard, it should be noted that the spacing between the slot 40 provided in each of the drag links 36 and the pin 37 at the other end of the link should be no greater than the inner radius of the sprockets 31 to enable the ends of the drag links pinned to the chains to be carried around the sprockets as illustrated in Fig. 4. This arrangement allows the .chains 29 to draw the tank 15 back and forth across the clean gas chamber 7 while only having to rotate the shaft 33 in one direction.

Again referring to the drawings, a pulsing nozzle 47 is secured to the tank 15 in alignment with each laterally extending row of apertures 9 and their associated venturi nozzles 10, and a second venturi nozzle 48 is suspended in spaced alignment from each of the pulsing nozzles 47 by a pair of brackets 49 secured to each of the pulsing nozzles. Each of the pulsing nozzles 47 is connected in fluid communication with the pressurized tank 15 through a normally closed diaphram valve 50 connected with the tank through a pipe 51 depending from the tank. The diaphram valves 50 are in turn connected in fluid communication to an electrical control system 52 including a solenoid arrangement mounted on the top of the tank 15 which can be triggered to simultaneously admit a pulse of air into each of the valves to momentarily open them so that each of the nozzles 47 emits a high energy pulse or jet of cleaning gas directed through its respective second venturi nozzle 48. While a variety of commercially available electrical solenoid arrangements are suitable for momentarily opening the diaphram valves, the electrical solenoid sold by Goyen Controls, Ltd. of Sidney, Australia under its model designation of RCA-6 has been found to be suitable for this purpose.

In the arrangement shown, the electrical control system 52 includes a proximaty sensor 53 mounted on the retaining plate 26 connected to the rear carirage plate 21. The proximaty sensor 53 is connected with the solenoid arrangement and is adapted to signal it each time the pulsing nozzles 47 are aligned with one of the transversely extending rows of apertures 9. Although a variety of proximity sensors can be used for this purpose, the present arrangement uses a normally open reed switch 53 for the proximity sensor which closes when it is brought into the proximity of a magnet 54 mounted on the rear rail 22 in alignment with each of the transversely extending rows.

From the foregoing, it can be seen that when it is desired to clean the filter panels, the motor 45 is turned on and the tank 15 begins moving across the clean gas chamber 7. In the preferred embodiment, the gearing associated with the motor 45 is set so that the tank 15 is moved at about 15 feet per minute. As the tank 15 moves past each transverse row of apertures 9, the reed switch 53 closes momentarily as it passes the magnet 54 aligned with the row which causes the solenoid arrangement to momentarily open the diaphram valves 50. This in turn allows a pulse of cleaning gas to be emitted from each of the pulsing nozzles 47 which is directed through the venture nozzles 48 and 10 to pulse clean the filter panels associated with that row of apertures. This process is repeated each time the tank 15 passes over a transverse row of apertures 9 as the tank 15 is moved back and forth across the clean gas chamber.

1. A filter apparatus for removing particulates from a dirty gas stream, of the type having:

a housing;

a gas impervious partition (4) dividing the interior of the housing (3) into a dirty gas chamber (5) and a clean gas chamber (7), said partition having a plurality of apertures (9) spaced apart in rows across the width of the partition providing fluid communication between said chambers;

dirty gas inlet (6) providing ingress for a dirty gas stream into the dirty gas chamber;

clean gas outlet (8) providing egress for a clean gas stream from the clean gas chamber;

a filter(11, 12, 13)secured in flow through relation across each of said apertures; and characterised by a reverse flow flushing arrangement comprising: a pulsing device (1) including a carriage (2), a guide device (22) supporting the carriage extending across the clean gas chamber; a pressure tank (15) connected to a source of pressurized gas mounted on said carriage; a pulsing nozzle (47) supported by the carriage and aimed to direct a gas pulse into each of the apertures when the nozzle is aligned with said apertures; a drive device (28) for selectively moving the carriage and tank along the guide device to align the pulsing nozzle with each of the apertures; a normally closed valve (50) connecting the pulsing nozzle in communication with the tank which when opened will release a flow of pressurized gas from the tank into the pulsing nozzle; and a control for automatically opening said valve device for a short period of time when said pulsing nozzle is positioned in alignment with each of the apertures to direct a pulse of gas into said aperture to induce a reverse flow of gases from the clean gas chamber through its associated filter to reverse flush clean the filter.

2. A filter apparatus according to claim 1, characterized in that said control includes a stationary magnet (54) mounted in the housing in transverse alignment with each of said rows of apertures, and a proximity sensing switch (53) supported by said carriage and triggered by the magnetic field of each of said magnets to signal said control to automatically open said valve when the pulsing nozzle is positioned in alignment with each of the apertures.

3. A filter apparatus according to claim 1 or 2, characterized in that each of said apertures includes a first venturi nozzle (10), secured to said partition (4) in communication with its respective aperture to augment aspiration of clean gases when the cleaning gases are pulsed through the apertures.

4. A filter apparatus according to claims 1, 2 or 3, and characterized in that a second venturi nozzle (48) is supported by the carriage and mounted between the partition and the pulsing nozzle in spaced coaxial alignment with said pulsing nozzle.

5. A filter apparatus according to claims 1, 2, 3 or 4, characterized in that said drive device includes first and second sprockets (30, 31) rotatably supported within the clean gas chamber on opposite sides of the housing, an endless chain (29) operatively interconnecting said sprockets, a motor (45) operatively connected to rotate said first sprocket to move the chain, and a drag link (36) interconnecting the chain and said tank to move the tank back and forth across the clean gas chamber upon predetermined rotation of said first sprocket.

6. A filter apparatus according to any of the preceding claims, characterized in that said guide device (22) for supporting said carriage includes a pair of spaced parallel rails.

FIG. 1

FIG.2

0114317

FIG. 3

FIG. 4